# EUROPÄISCHE PATENTSCHRIFT

(11) **EP 0 397 979 B1**
(45) Veröffentlichungstag und Bekanntmachung des Hinweises auf die Patenterteilung: **05.01.1994**
(21) Anmeldenummer: 90104587.2
(22) Anmeldetag: 10.03.1990
(51) Int. Cl.: B29C 33/04, B30B 15/06

(54) **Vulkanisierplatte**
Vulcanisation plate
Plaque de vulcanisation

(30) Priorität: 18.05.1989 DE 3916163
(43) Veröffentlichungstag der Anmeldung: 22.11.1990
(73) Patentinhaber: F.E. Schulte Strathaus KG, D-59409 Unna (DE)
(72) Erfinder: Schulte Strathaus, Franz E., D-4750 Unna (DE); Schulte Strathaus, Michael, Dr., D-5757 Wickede/Ruhr (DE); Ruchay, Dieter, D-4750 Unna-Lünern (DE)
(74) Vertreter: Patentanwälte Meinke, Dabringhaus und Partner

(56) Entgegenhaltungen:
- DE-A- 2 948 084
- US-A- 3 594 867
- US-A- 3 754 499

## Beschreibung

Die Erfindung richtet sich auf eine Vulkanisierplatte der im Oberbegriff des Anspruches 1 angegebenen Gattung.

Aus der US-A-3 754 499 ist eine stationäre Vulkanisationsanlage bekannt, bei der jede Preßplatte einen mehrschichtigen Aufbau aufweist aus voneinander trennbaren Elementen, wie einer Heizplatte, Isolierplatten, Wärmeverteilplatten, Druckplatten und Kühlplatten, die, einmal zusammengestellt, am Stempel bzw. Auflager der Vulkanisierpresse festgelegt sind. Ein Austausch der Platten zum Einsatz an einer anderen Stelle ist dort nicht vorgesehen.

Andere Ausführungen von Vulkanisierplatten beschreiben die DE-A-27 27 300 oder DE-A-29 48 084. Einen etwas anderen Aufbau mit einem Flächenheizkörper, eingespannt zwischen zwei Platten, zeigt beispielsweise die DE-A-22 48 810.

Bekannte Vulkansierplatten sind vergleichsweise ausgereift und führen zu guten Ergebnissen, sie haben allerdings den Nachteil, daß sie vergleichsweise schwer sind, was ihre Handhabung nicht vereinfacht. Um das Gewicht zu verringern, ist die Anmelderin bereits einen anderen Weg gegangen, der in der WO 87/06876 beschrieben ist, wobei Kühl- und Heizkanäle in Leichtmetallprofilleisten im wesentlichen parallel nebeneinander vorgesehen sind. Derartige Leichtmetall-Lösungen lassen sich nicht immer in der Praxis einsetzen. So ist der Einsatz derartiger Platten unter Tage unerwünscht bzw. verboten.

Aufgabe der Erfindung ist die Schaffung einer Lösung, mit der Vulkanisierplatten in zufriedenstellender Funktionsweise beibehalten werden unter gleichzeitiger erheblicher Gewichtsreduzierung beim Transport der Platten zum Einsatzort hin und von dort wieder weg.

Diese Aufgabe wird mit einer erfindungsgemäßen Vulkanisierplatte der eingangs bezeichneten Art dadurch gelöst, daß zur Vereinfachung des Transportes der Platte, insbesondere zum Einsatz unter Tage, jeder Plattenteil mit individuellen Traggriffen und mit außenrandseitigen Elementen zum form- und/oder kraftschlüssigen Verbinden am Einsatzort der Plattenteile aneinander ausgerüstet ist.

Mit der Erfindung wird erreicht, daß eine Einzelplatte in zwei Teilplatten für den Transport zerlegbar ist, womit automatisch eine erhebliche Gewichtsreduzierung der Teile bewirkt wird, die von den Personen beispielweise unter Tage bewegt werden müssen. Dabei können optimale Gestaltungen sowohl der Heizplatte als auch der Kühlplatte beibehalten werden, die Gestaltung kann nach den hier bekannten Lösungen noch verbessert werden.

Bei der form- bzw. kraftschlüssigen Verbindung kann es sich beispielsweise um eine Nut/Federverbindung handeln, um Schwalbenschwanzführungen, um Verschraubungen, um Schnellspanneinrichtungen od. dgl. Durch die individuellen Traggriffe an den Plattenteilen wird die Handhabbarkeit weiter verbessert, dies ist bei dem bevorzugten Einsatzgebiet besonders wichtig.

Eine besonders zweckmäßige Gestaltung ist dann gegeben, wenn die Traggriffe aus einer Lage zum Transport der Platte in eine Arbeitslage verschwenkbar sind, wie dies die Erfindung in weiterer Ausgestaltung ebenfalls vorsieht. Dabei können die Traggriffe in der Arbeitslage der Heizplatte nach unten abgesenkt werden, um die stirnseitigen Anschlußleisten freizugeben, die Handhabungsgriffe der Kühlplatte können beispielsweise in das Innere vor der Montage eingeschoben werden.

Weitere Ausgestaltungen bestehen darin, daß die Verrastelemente der Plattenteile als stirnseitige Nut/Federblöcke ausgebildet sind, wobei Nut/Federblöcke gleichzeitig die Lagerelemente für die Handgriffe bilden können.

Zweckmäßig ist, wenn wenigstens je ein außenrandseitiger Block in seiner Höhe verstellbar an dem Heizplattenteil angeordnet ist, was bei der späteren Zwischenlage der zu vulkanisierenden Gurtbänder, deren Positionierung und Verteilung an den jeweiligen Vulkanisierplattenpaaren erleichtert.

Um die Kühlleistung des Kühlplattenteiles zu erhöhen, kann vorgesehen sein, daß das Kühlplattenteil aus zwei voneinander getrennten Schichten zur individuellen Beaufschlagung mit einem gasförmige bzw. einem flüssigen Kühlmittel gebildet ist. So kann beispielsweise unter Tage Frischluft als Kühlmittel, Wasser als Kühlmittel oder beide Medien gleichzeitig als Kühlmittel eingesetzt werden, was zwangsläufig zu einer Beschleunigung des Abkühlverhaltens führt.

Durch die starke Gewichtseinsparung auch gegenüber Leichtmetallen können auch schwerere Werkstoffe bei der Herstellung der Heizplatten eingesetzt werden. In einer für die Erfindung besonders wesentlichen Ausgestaltung ist daher vorgesehen, daß die Plattenteile aus einer Bronzelegierung, insbesondere aus einer (Cu Al 10 Ni)-Legierung, gebildet sind.

Weitere Merkmale, Einzelheiten und Vorteile der Erfindung ergeben sich aus der nachfolgenden Beschreibung sowie anhand der Zeichnung. Diese zeigt in
- Fig. 1: eine Aufsicht auf eine Heizplatte nach der Erfindung,
- Fig. 2: eine Seitenansicht einer Heizplatte,
- Fig. 3: eine räumliche Darstellung eines Ausschnittes der Platte im stirnseitigen Steckerbereich,
- Fig. 4: bis 8 Detailzeichnungen der Griffsituation der beiden Plattenteile in der Montagesituation, wobei die römischen Schnittlinienangaben den entsprechenden Zeichnungen entsprechen. Dabei stellt
- Fig. 5: die Schnittlinie V-V in Fig. 8 dar,
- Fig. 6: den Schnitt etwa gemäß VI-VI in Fig. 7 und
- Fig. 7: den Schnitt gemäß VII-VII in Fig. 4,
- Fig. 9: einen Schnitt gemäß Linie IX-IX in Fig. 11,
- Fig. 10: einen Schnitt gemäß Linie X-X ebenfalls Fig. 11,
- Fig. 11: eine Aufsicht auf einen Horizontalschnitt durch die gasbeaufschlagte Kühlebene und
- Fig. 12: einen Schnitt durch die flüssigkeitsbeaufschlagte Kühlebene der Kühlplatte.

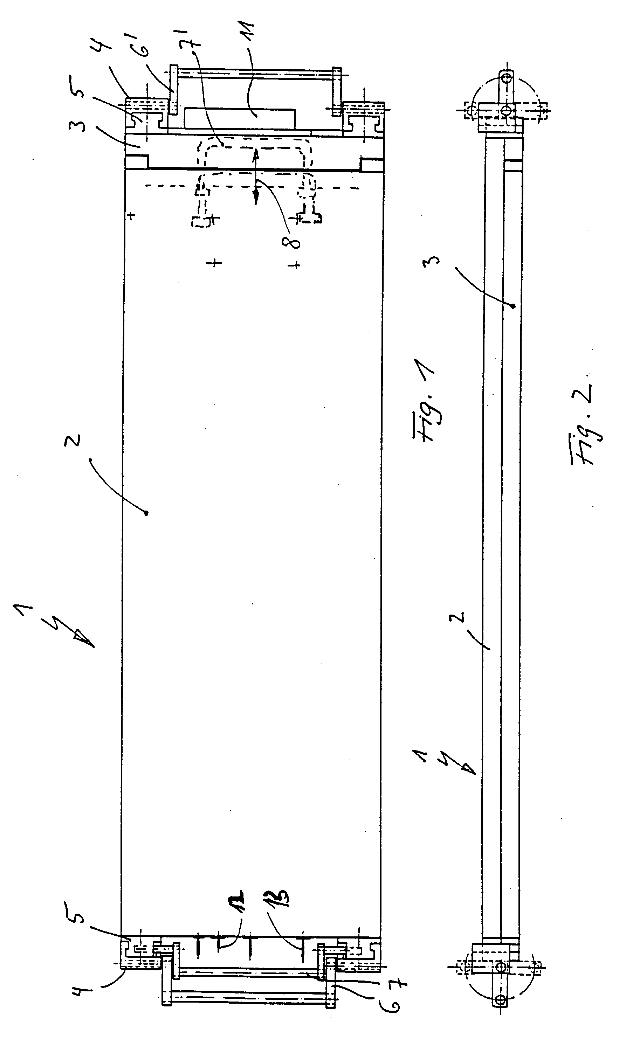

Die allgemein mit 1 bezeichnete Vulkanisierplatte besteht aus einem Kühlplattenteil 2, der formschlüssig in einem Heizplattenteil 3 in der Gebrauchslage eingebettet ist und aus diesem Teil ausnehmbar und getrennt transportierbar ist. Zur formschlüssigen Verbindung der beiden Plattenteile 2 und 3 aneinander sind diese mit stirnseitigen, außenrandseitigen Rastelementen 4 bzw. 5 ausgerüstet, die als Nut/Federblöcke ausgebildet sind. Diese Blöcke 4 und 5 dienen gleichzeitig als Lager für wenigstens einen der Traggriffe 6 bzw. 7 des Heizplattenteiles einerseits bzw. des Kühlplattenteiles andererseits, wobei der Traggriff 7′ des Kühlplattenteiles in das Innere dieses Plattenteiles vor der Montage zusammen einschiebbar ist, wie dies in Fig. 1 gestrichelt wiedergegeben wurde. Die Einschiebbarkeit ist dort mit dem Doppelpfeil 8 angedeutet.

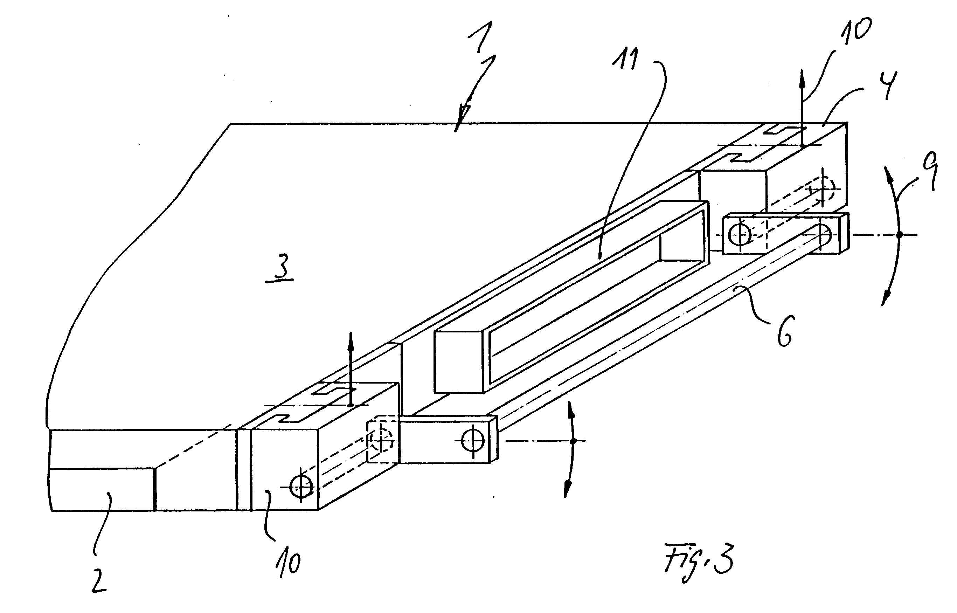

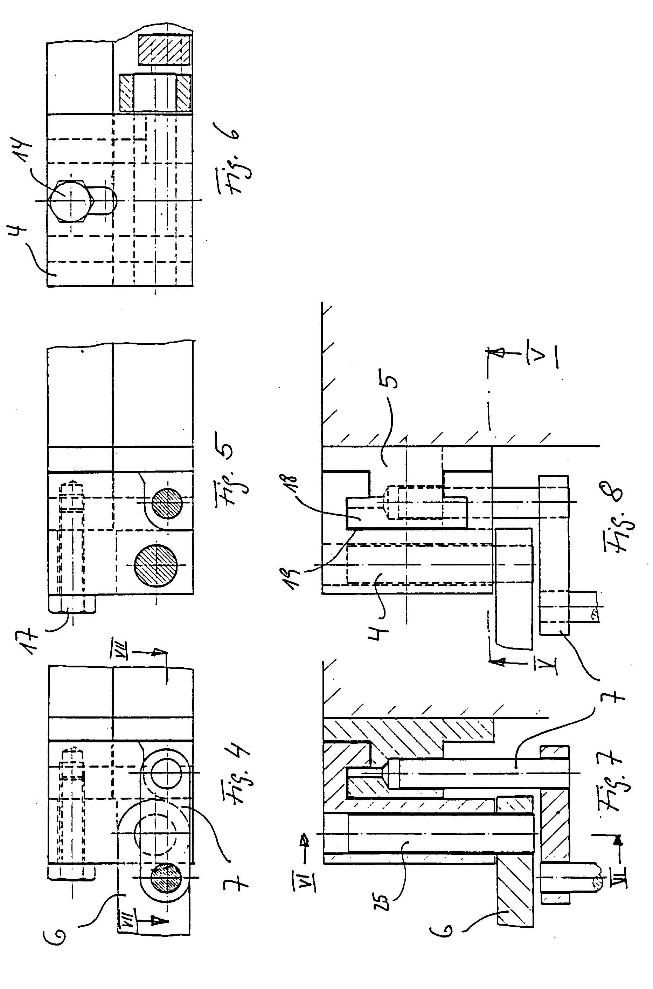

In Fig. 3 ist eine stirnseitige Ansicht der Heizplatte 1 dargestellt, wobei die Bewegbarkeit des Traggriffes 6 durch die Doppelpfeile 9 angedeutet ist. Eine Höhenverstellbarkeit der Lager- und Rastblöcke 4 ist dort mit einem Pfeil 10 angedeutet. Die Höhenverstellbarkeit kann dann sinnvoll sein, wenn die Gurtbänder aufgelegt sind und seitlich verkeilt werden sollen, die Blöcke 4 können dann als Anschlag für entsprechende Verkeilungshilfsmittel dienen. Der Steckeranschluß für die elektrische Zuleitung der Heizplatte 3 ist in Fig. 3 lediglich angedeutet und mit 11 bezeichnet. Die Kühlplatte selbst ist im dargestellten Beispiel zweilagig ausgebildet und von zwei unterschiedlichen Kühlmedien beaufschlagbar, sei es gleichzeitig, nacheinander oder getrennt voneinander. Die Luftzufuhr- und Wasserzufuhrstutzen sind in Fig. 1 angedeutet und mit 12 bzw. 13 bezeichnet, auf deren spezielle Ausgestaltung kommt es nach der Erfindung nicht an. Die Kühlplatte 2 ist weiter unten noch näher beschrieben.

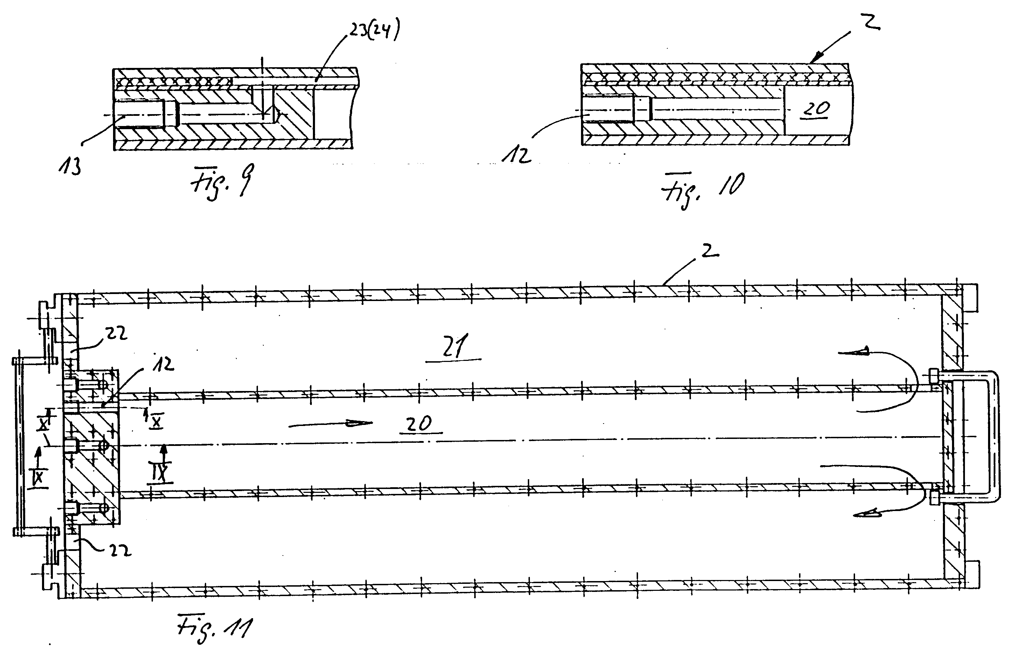

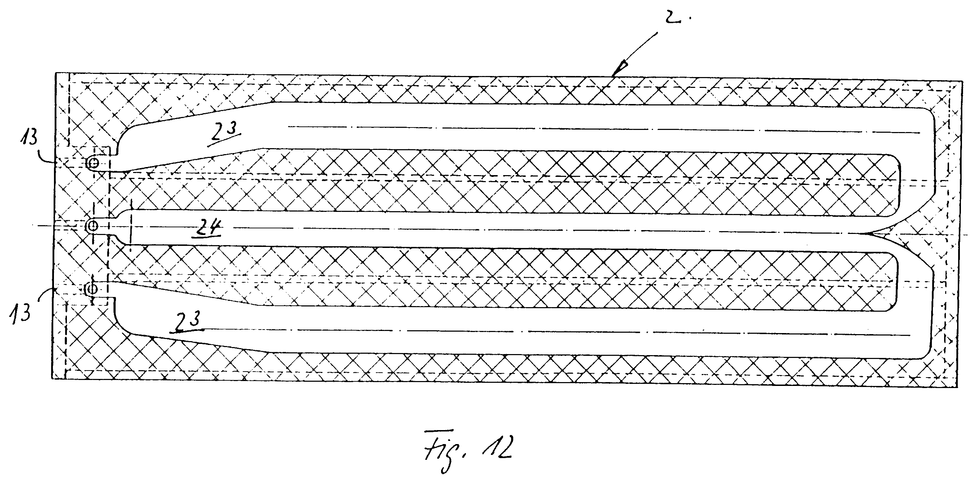

Die Fig. 4 bis 8 zeigen die Einbausituationen im Bereich der Traggriffe der beiden Plattenteile und die Höhenverstellbarkeit des äußeren Lagerblockes (Fig. 6) mit Hilfe einer Einstellschraube, die ansonsten in den Figuren nicht näher dargestellt ist. Erkennbar verhaken die Blöcke 4 und 5 durch den eingriff eines T-förmigen Elementes 18 im Block 5 der einen Platte in eine entsprechende Nut 19 im Block 4 der anderen Platte, wie sich dies deutlich aus Fig. 8 ergibt. Neben dieser T-förmigen Gestaltung von Eingriffselement und Nut können auch andere Konfigurationen gewählt werden, etwa eine Schwalbenschwanzführung od. dgl.

Die Fig. 9 zeigt eine Teilaufsicht auf die geschnittene Kühlplatte 2 in der Lage, die für die Luftkühlung ausgebildet ist, mit einem Lufteintrittsstutzen 12, einem mittleren Luftführungskanal 20 und äußeren Luftrückführkanälen 21 mit Luftaustrittsstutzen 22, der entsprechende Schnitt durch den Lufteintrittsstutzen 12 ist in Fig. 10 dargestellt.

In Fig. 12 ist der Bereich der Kühlplatte 2 dargestellt, der zur Wasserkühlung dient. Hier sind beispielsweise zwei Wassereintrittsstutzen 13 außenrandseitig vorgesehen mit Strömungskanälen 23 und einem inneren Rückführkanal 24, um das Gegenstromprinzip gegenüber der Luftkühlung zu erreichen. Natürlich können die Kühlkanäle auch in umgekehrter Richtung durchströmt sein. Der Schnitt gemäß Fig. 9 zeigt den Bereich eines Eintrittsstutzens 13 bzw. eines entsprechenden Austrittsstutzens durch den Schichtaufbau der Kühlplatte 2.

Um beispielsweise benachbarte Platten aneinander festlegen zu können, können die Wellenstutzen 25 (Fig. 7) der Traggriffe 6 hohlzylindrisch ausgebildet sein, um eine Verschraubung benachbarter Platten durch diese Hohlzylinder hindurch zu ermöglichen, sie können aber auch in wechselnder Folge mit Gewinde versehen sein, um Gewindebolzen einschrauben zu können u. dgl. mehr.

## Patentansprüche

1. Vulkanisierplatte (1) zum Einsatz in einer Vorrichtung zum thermischen Verbinden von mindestens zwei Teilen, insbesondere von Fördergurtenden, wobei die Vulkanisierplatte (1) mit einem in der Gebrauchslage dem zu vulkanisierenden Medium zugewandten Heizbereich und einem zur Rückkühlung eingesetzten Kühlbereich versehen ist, wobei der Heizbereich und der Kühlbereich von körperlich voneinander trennbaren, in der Gebrauchslage zusammengefügten Plattenteilen (2,3) gebildet sind.
dadurch gekennzeichnet,
daß zur Vereinfachung des Transportes der Platte, insbesondere zum Einsatz unter Tage, jeder Plattenteil (2,3) mit individuellen Traggriffen (6,7) und mit außenrandseitigen Elementen (4,5) zum form- und/oder kraftschlüssigen Verbinden am Einsatzort der Plattenteile (2,3) aneinander ausgerüstet ist.

2. Vulkanisierplatte nach Anspruch 1,
dadurch gekennzeichnet,
daß die Traggriffe (6,7) aus einer Lage zum Transport der Platte (1) in eine Arbeitslage verschwenkbar sind.

3. Vulkanisierplatte nach Anspruch 1 oder 2,
dadurch gekennzeichnet,
daß die Verbindungselemente der Plattenteile (2,3) als stirnseitige Nut/Federblöcke (4,5) ausgebildet sind.

4. Vulkanisierplatte nach Anspruch 3,
dadurch gekennzeichnet,
daß die Nut/Federblöcke (4,5) Lagerelemente für die Handgriffe (6,7) bilden.

5. Vulkanisierplatte nach einem der vorangehenden Ansprüche,
dadurch gekennzeichnet,
daß wenigstens je ein außenrandseitiger Block (4) in seiner Höhe verstellbar an dem Heizplattenteil (3) angeordnet ist.

6. Vulkanisierplatte nach einem der vorangehenden Ansprüche,
dadurch gekennzeichnet,
daß das Kühlplattenteil (2) aus zwei voneinander getrennten Schichten zur individuellen Beaufschlagung mit einem gasförmigen bzw. einem flüssigen Kühlmittel gebildet ist.

7. Vulkanisierplatte nach einem der vorangehenden Ansprüche,
dadurch gekennzeichnet,
daß die Plattenteile (2,3) aus einer Bronzelegierung, insbesondere aus einer (Cu Al 10 Ni)-Legierung, gebildet sind.

## Claims

1. A vulcanising plate (1) for use in an apparatus for thermally joining at least two portions, in particular conveyor belt ends, wherein the vulcanising plate (1) is provided with a heating region which in the position of use is towards the medium to be vulcanised, and a cooling region which is used for cooling-down purposes, wherein the heating region and the cooling region are formed by plate portions (2, 3) which can be physically separated from each other and which are assembled together in the position of use, characterised in that to simplify transportation of the plate, in particular for use underground, each plate portion (2, 3) is provided with individual carrying handles (6, 7) and with elements (4, 5) at the outside edges for positive-lockingly and/or force-lockingly connecting the plate portions (2, 3) to each other at the location of use.

2. A vulcanising plate according to claim 1 characterised in that the carrying handles (6, 7) are pivotable from a position for transportation of the plate (1) into a working position.

3. A vulcanising plate according to claim 1 or claim 2 characterised in that the connecting elements of the plate portions (2, 3) are in the form of groove/tongue blocks (4, 5) at the ends.

4. A vulcanising plate according to claim 3 characterised in that the groove/tongue blocks (4, 5) form bunting elements for the handles (6, 7).

5. A vulcanising plate according to one of the preceding claims characterised in that at least one respective block (4) at the outside edge is arranged adjustably in respect of its height on the heating plate portion (3).

6. A vulcanising plate according to one of the preceding claims characterised in that the cooling plate portion (2) is formed from two mutually separated layers for being individually acted upon by a gaseous and a liquid coolant respectively.

7. A vulcanising plate according to one of the preceding claims characterised in that the plate portions (2, 3) are formed from a bronze alloy, in particular a (Cu Al 10 Ni)-alloy.

## Revendications

1. Plaque de vulcanisation (1) destinée à être utilisée dans un dispositif pour effectuer une liaison thermique entre au moins deux pièces, notamment d'extrémités de courroies transporteuses, la plaque de vulcanisation (1) étant munie d'une région chauffante tournée vers le matériau à vulcaniser dans la position d'utilisation et d'une région de refroidissement pour son refroidissement, la région de chauffage et la région de refroidissement étant constituées par des plaques composantes (2, 3) assemblées dans leur position d'utilisation et pouvant être séparées l'une de l'autre physiquement,
caractérisée en ce que pour faciliter le transport de la plaque, et notamment pour l'utiliser dans une exploitation souterraine, chaque plaque composante (2, 3) est équipée de poignées individuelles (6, 7) et d'éléments latéraux de bord externes (4, 5) pour constituer une liaison par concordance de formes et/ou fermement fixée sur le lieu de l'utilisation des plaques composantes (2, 3).

2. Plaque de vulcanisation selon la revendication 1, caractérisée en ce que les poignées (6, 7) peuvent être pivotées entre une position de transport de la plaque (1) et une position de travail.

3. Plaque de vulcanisation selon la revendication 1 ou 2, caractérisée en ce que les éléments de liaison des plaques composantes (2, 3) sont constitués sous forme de blocs à rainure et languette (4, 5) sur le côté frontal.

4. Plaque de vulcanisation selon la revendication 3, caractérisée en ce que les blocs à rainure et languette (4, 5) forment des éléments de support pour les poignées (6, 7).

5. Plaque de vulcanisation selon l'une quelconque des revendications précédentes, caractérisée en ce qu'au moins un bloc latéral de bord externe (4) peut être déplacé en hauteur sur la plaque chauffante (3).

6. Plaque de vulcanisation selon l'une quelconque des revendications précédentes, caractérisée en ce que la plaque de refroidissement (2) est constituée par deux couches séparées l'une de l'autre en vue de leur alimentation individuelle avec un agent réfrigérant gazeux ou un agent réfrigérant liquide.

7. Plaque de vulcanisation selon l'une quelconque des revendications précédentes, caractérisée en ce que les plaques composantes (2, 3) sont constituées en un alliage de bronze et en particulier en un alliage de (Cu Al 10 Ni)
